# EUROPEAN PATENT APPLICATION

(11) **EP 2 369 472 A1**
(43) Date of publication of application: **28.09.2011**
(21) Application number: 10154934.3
(22) Date of filing: 26.02.2010
(51) Int. Cl.: G06F 9/445, G06F 21/00, H04L 29/08, H04L 29/06

(54) **System and method for providing access to a service relating to an account for an electronic device in a network**

(71) Applicant: RESEARCH IN MOTION LIMITED, Waterloo, Ontario N2L 3W8 (CA)
(72) Inventor: Ferrazzini, Axel, 1050, Brussels (BE); Martin-Cocher, Gaelle, Toronto Ontario M6G 3H1 (CA); McColgan, Brian, Toronto Ontario M9A 2T6 (CA)
(74) Representative: Moore, Barry

(57) **Abstract**

The disclosure relates to a system and method for providing access for an electronic device to an account associated with a host device through a server in communication with the hosted electronic device. The method comprises: after establishing a communication link between the electronic device and the host device, identifying an account associated with the host device; establishing an associated account for the electronic device, the associated account providing access to the account for the host device; and providing access by the server to an application associated with the account to the electronic device through the associated account.

## Description

### FIELD OF DISCLOSURE

The disclosure described herein relates to a system and method for providing a terminal electronic device ("terminal device") such as a desktop or laptop computer with access to a service relating to an account. In particular, the service may be an application, such as a messaging application and the account is used to access the service. The account represents a provisioned or established 'user' and / or role-instance (such as a message user role) associated with the service. The account may also be associated with at least one host electronic device ("host device"), such as a wireless communication device, such as a cellphone, personal digital assistant (PDA), smart phone or BlackBerry (trademark) device.

### BACKGROUND

Wireless handheld mobile communication devices perform a variety of functions to enable mobile users to stay organized and in contact with others in a communication network through email, schedulers and address books. Such devices, due to their portability, have limited computing power, small display screens and small keypads/keyboards.

Desktop and laptop computers, compared with wireless handheld devices have enhanced computing power, larger display screens and larger keypads/keyboards.

Prior art systems exist that enable a mobile communication device to be connected to a (larger) computer to provide some degree of application / data sharing between the two devices. However, such interface systems provide limited capabilities with how the terminal device accesses features such as screen/keyboard sharing mechanisms between the computer and the handheld device.

### BRIEF DESCRIPTION OF THE DRAWINGS

Embodiments of the present disclosure will now be described, by way of example only, with reference to the accompanying drawings, in which:

Fig. 1 is a schematic diagram of a communication network having a server that is in communication with a host (wireless) device and a terminal computer that is in communication with the wireless device as provided in an embodiment;

Fig. 2A is a flowchart of a process executed by an embodiment for a first facility to associate the computer to the wireless device and the server of Fig. 1;

Fig. 2B is a flowchart of a process executed by an embodiment for a second facility to associate the computer to the wireless device and the server of Fig. 1;

Fig. 2C is a flowchart of a process executed by an embodiment for a third facility to associate the computer to the wireless device and the server of Fig. 1;

Fig. 3A is a flowchart of a process executed by an embodiment for another feature to provide an application to the computer when communicating with the wireless device of Fig. 1;

Fig. 3B is a flowchart of a process executed by an embodiment during execution of a command for the application on the computer which is processed through the wireless device and the server of Fig. 1;

Fig. 3C is a flowchart of a process executed by an embodiment for another feature to remove an application to the computer when a connection to the wireless device of Fig. 1 is disconnected;

Fig. 4 is a block diagram of certain internal components of the wireless device of Fig. 1;

Fig. 5 is a block diagram of certain exterior components of the wireless device of Fig. 1;

Fig. 6 is a block diagram of certain internal components of the computer of Fig. 1; and

Fig. 7 is a block diagram of certain internal components of the server of Fig. 1.

### DETAILED DESCRIPTION OF AN EMBODIMENT

The description which follows and the embodiments described therein are provided by way of illustration of an example or examples of particular embodiments of the principles of the present disclosure. These examples are provided for the purposes of explanation and not limitation of those principles and of the present disclosure. In the description which follows, like parts are marked throughout the specification and the drawings with the same respective reference numerals.

In a first aspect, a method in a host device is provided. The method comprises: receiving a request to create an associated account associated with a primary account; requesting creation of an associated terminal account; and upon receiving a message regarding the creation of the associated account, sending a message regarding the associated account to a terminal device.

In the method, the primary account may be associated with the host device; the associated account may provide access to the primary account for the terminal device; and access may be provided by the server to an application associated with the primary account to the terminal device through the associated account.

In the method, the associated account may utilize an account identifier associated with the primary account; and the terminal device may access the application using the associated account through another device and a connection between the host device and the server.

In the method, the associated account may be associated with the primary account as long as the terminal device has a communication link established with the host device; and the terminal device may access the application using the associated account through a connection linking the terminal device to the host device and server.

In the method, the associated account may utilize an account identifier associated with the primary account and identification information associated with the another device; and the terminal electronic device may access the application using the associated account through another device and a connection between the another device and the server.

In the method, the identification information may be based on any of a Mobile Subscriber Integrated Services Digital Network Number (MSISDN) or an International Mobile Equipment Identity (IMEI) number.

The method may further comprise transferring to the terminal device an ancillary application for installation on the terminal device providing access to the application when the terminal device is connected to the another device.

The method may further comprise removing the ancillary application from the terminal device when the application has been terminated or when the communication link is disconnected.

In the method, an uninstall application may be provided to the terminal device to initiate removing the ancillary application when the communication link is disconnected.

In the method, the application may be a messaging application accessible by the host device; the terminal device may create an outbound message for transmission by the application using an ancillary application operating on the terminal device and transmits the outbound message to the host device; the host device may receive the outbound message and create and send a second outbound message containing the outbound message to the server; and the server may receive the second outbound message, check the associated account data of the terminal device against the second outbound message, and if the associated account data is verified, then the server may forward the second outbound message to a message server for processing.

In a second aspect, a method for processing a command for an application through a server by a host device connected to a network is provided. The method comprises: at the host device receiving a message containing a command and data from a terminal device connected to the host device to, the command relating a function to be executed by the application; at the host device, evaluating the command and the data from the message and generating a second command relating to the command and the data for the server; and sending the second command to the server from the host device.

In the method, the server may analyze data of an associated account for the terminal device against a primary account for the host device to determine if the command in the second message is to be executed.

In the method, the associated account may be associated with the primary account as long as the terminal device has a communication link established with the another device; and the terminal device may access the application using the associated account through a connection linking the terminal device to the another electronic device and server.

In the method, the associated account may utilize an account identifier associated with the primary account and identification information associated with the another electronic device; and the terminal device may access the application using the associated account through the another device and a connection between the another device an the server.

In the method, the identification information may be based on any of a Mobile Subscriber Integrated Services Digital Network Number (MSISDN) or an International Mobile Equipment Identity (IMEI) number.

In a third aspect, an application operating on a microprocessor of a host device is provided. The application provides instructions to the microprocessor. The instructions allow the application: to identify an account associated with the host device, to establish an associated account for the terminal device after establishing a communication link between the terminal device and the host device, the associated account providing access to the primary account for the host device; and to provide access by the server to an application associated with the primary account to the terminal device through the associated account.

In the application, the associated account may utilize an account identifier associated with the primary account; and the terminal device may access the application using the associated account through the host device and a connection between the host device and the server.

In the application, the associated account may be associated with the primary account as long as the terminal device has a communication link established with the another device; and the terminal device may access the application using the associated account through a connection linking the terminal device to another device and server.

In the application, the associated account may utilize an account identifier associated with the primary account and identification information associated with the another electronic device; and the terminal device may access the application using the associated account through the another device and a connection between the another device and the server.

In the application, the identification information may be based on any of a Mobile Subscriber Integrated Services Digital Network Number (MSISDN) or an International Mobile Equipment Identity (IMEI) number.

In other aspects, various combinations of sets and subsets of the above aspects are provided.

Exemplary details of embodiments are provided herein. Briefly an embodiment provides a system and method for providing a terminal device (such as a desktop or laptop computer, or a PDA) connected to (or associated with) a host device (such as a computer, cellular phone, a smart phone, a PDA, or a BlackBerry (trademark)) with access to an application that the host device normally executes. The access may be managed and controlled by an interface server or relay infrastructure within a network that the host device is connected to. In one embodiment, the host device may be connected to a network that provides a "known" addressable endpoint for the host device. The associated infrastructure for the host device and the network may be a generalized proxy or server or commercial network, such as a BlackBerry (trademark) infrastructure network. An embodiment automatically installs software on the terminal when the host device is connected or associated with the given terminal device. This enables the terminal device to access the application. In another embodiment, the host device automatically deactivates or removes the software when the terminal device has completed its access and/or the host device is no longer connected or associated with the given terminal device.

In one embodiment, the application accessed by the terminal device is a messaging application. The terminal device is provided with access to a messaging account associated with the messaging application and the host device. The messaging application may process text messages, short message services (SMS), instant messages (IM), emails or other communication types. As such, the terminal device may create and send messages through the account. The terminal device may also receive messages.

For the terminal device, an associated account may be established and linked to the account of the host device. With the associated account full or partial privileges provided to the original account (and the host device) are provided to the terminal device.

Another feature of an embodiment provides a downloading facility that downloads an application to the terminal device for execution on the terminal device. The downloading feature is provided, in one embodiment, when a connection is established between the host device and the terminal device. This downloading feature enables various terminal devices to use an application managed through the host device, as a terminal device can be provided with the required application (or required interface application(s)) thereby reducing or eliminating a need to have the application(s) pre-installed on the terminal devices. In one downloading facility, once the host device and the terminal device are connected, the host device may be able to send inquiries to the terminal device or may be able to assess what applications should be provided to the terminal device and will then download and cause its installation on the terminal device. Alternatively, the terminal device may be able to identify what applications it needs. The host device may provide link information for the applications (e.g. through a URL provided to the terminal device) and the terminal device will then access the link information to access and install the applications. Another feature is that once a connection session between the host device and the terminal device is completed, one or more of the downloaded applications is automatically removed from the terminal device.

With an outline of exemplary features of an embodiment described, further details are provided on general concepts and features of embodiments. An embodiment is provided in an operating environment where a host device has established a connection to a network and a terminal device has established a connection to the host device. The connection between the host device and the network provides the host with access to a network-related service (e.g. IM). The connection between the host device and the terminal device allows the terminal device to access the service through the connection between the host device and the network. Alternative access and connection links may be provided for the terminal device to the network in other embodiments.

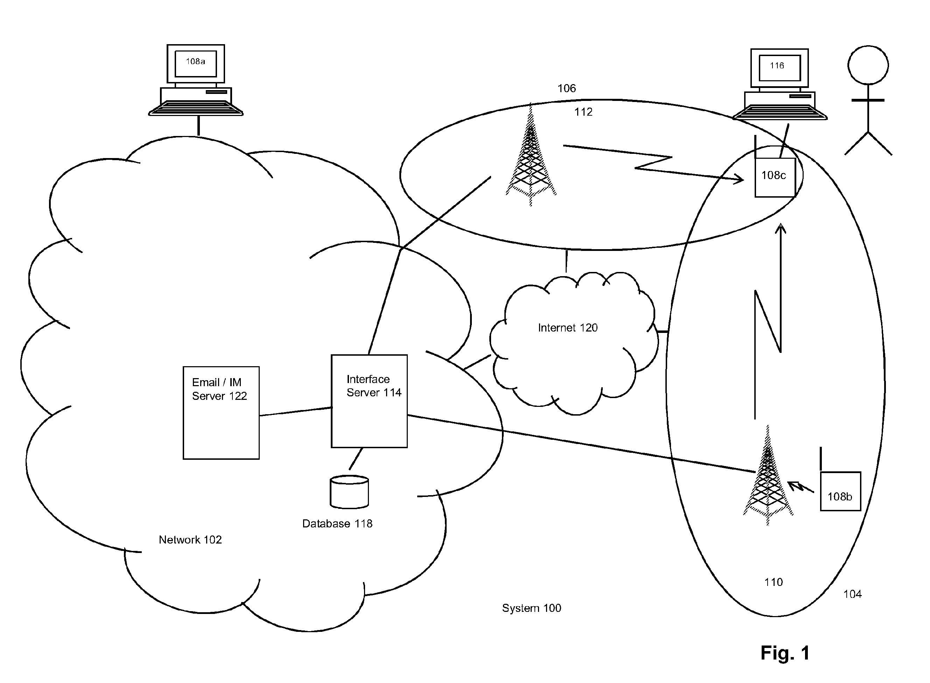

Fig. 1, provides details on a set of interconnected networks that are provided in communication system 100. Exemplary networks in system 100 are network 102, cellular network 104 and wireless network 106. Each network is described in turn.

Network 102 provides a suite of applications, services and data to its connected device 108a (and other devices) through associated servers 122, such as email server 122. Network 102 can be implemented in any known architecture, providing wired or wireless connections to its accessible elements.

Cellular network 104 provides wireless communications between wireless devices 108c that are within the coverage area of cellular network 104. The coverage area may overlap with the coverage areas of other networks, such as network 102 and wireless network 104. Cellular network 104 provides voice and data services to devices 108b. Data-centric technologies for cellular network 104 include the Mobitex (trademark) Radio Network ("Mobitex") and the DataTAC (trademark) Radio Network ("DataTAC"). Voice-centric technologies for cellular network 104 include Personal Communication Systems (PCS) networks like Global System for Mobile Communications (GSM) and Time Division Multiple Access (TDMA) systems. Certain networks provide multiple systems. For example, dual-mode wireless networks include Code Division Multiple Access (CDMA) networks, General Packet Radio Service (GPRS) networks, and so-called third-generation (3G) networks, such as Enhanced Data rates for Global Evolution (EDGE) and Universal Mobile Telecommunications Systems (UMTS). Other network communication technologies that may be employed include, for example, Ultra Mobile Broadband (UMB), Evolution-Data Optimized (EV-DO), and High Speed Packet Access (HSPA), Long Term Evolution (LTE), etc.

Wireless network 106 normally delivers information to and from mobile devices 108b via RF transmissions between base stations and mobile device 108c (and other devices) through coverage area 112. Network 106 may be a Wi-Fi network. In certain locations, device 108c (utilizing a multi-mode radio access configuration) may be able to simultaneously access to multiple networks where transmission areas overlap. Device 108c is shown in an overlapping region of wireless network 106 and cellular network 104.

Internet network 120 may be inter-connected to one or more networks 102, 104 and 106.

In network 102, linking modules, proxies and/or gateway servers are provided to connect network 102 to other networks. Interface (or gateway) server 114 provides an interface for network 102 to a wireless network 106. Functions such as providing and/or exposing network addresses for mobile devices 108, encoding or otherwise transforming messages for wireless transmission, and any other required interface functions are performed by interface server 114. Although interface server 114 operates with the single wireless network 106, wireless gateways may be configured to operate with more than one wireless network in alternative embodiments. Network 102 may also be connected to a wide area network (WAN) (not shown). Alternatively, private wireless network gateways, such as wireless Virtual Private Network (VPN) routers, could be implemented to provide a private and/or secure interface to a wireless network. For example, a wireless VPN router implemented in a WAN may provide a private interface from the WAN to one or more mobile devices 108 through interface server 114. Database 118 may be provided to store records relating to accounts associated with network 102 and/or servers 114.

In processing an exemplary communication from a device 108a connected to network 102 destined to network 106, such as device 108c is for server 114 to process all inbound emails from email server 122 destined for device 108c, then repackage and format them utilizing suitable communication message protocols that can be processed for transmission to device 108c in wireless network 106. For the sake of reference and not limitation, the term "inbound" is used to refer to transmissions directed to device 108c and "outbound" refers to transmissions from device 108c to another device either within the same, or possibly different network.

In processing these communications, server 114 utilizes a set of accounts associated with expected, detected or newly registered devices 108 that are in communication with wireless network 106. Interface server 114 may have an account management process (not shown) perform administration functions. In one embodiment, the account management process also creates, manages and processes communications relating to associated accounts that are linked to the accounts. Gateway server 114 may be a proxy server. Alternatively, gateway server 114 may be an enterprise server, such as a BlackBerry Enterprise Server (BES) (trademark). As such, gateway 114 can interact with host devices already registered (and therefore detected/expected). Additionally, server 114 may interact with new devices that are going through a registration process within wireless network 106.

In order to process communications destined for device 108, interface server 114 has an internal network account established communications that it receives. Generally, the account is associated with a particular device 108, such as device 108c. The user of device 108c will be provided with details regarding the account name and password. A sign-on process to access and authenticate device 108 operating on server 114 may be initiated to provide device 108 with access to the account when device 10 enters network 106. This process may be automatically initiated upon detection of device 108. Alternatively, a manual sign-on process may be initiated by device 108c or server 114. In one embodiment, a sign-on process provides a request for a user identification code and password from device 108c and then device 108c may create and send a response providing the code and password to server 114. The process may not require input from a user or alternatively, a graphical user interface (GUI) may be created on a screen on device 108c to prompt a user of device 108c to enter the code and password. Once the code and password are provided to server 114, server 114 will authenticate both against its records. If authentication passes, then device 108c is provided with access to services and servers associated with the account.

Interface server 114 may process a variety of communication transmissions destined for device 108c, including an email, a Short Message Service (SMS) message a telephone call, a Family Radio Service (FRS) transmission, Multimedia Message Service (MMS), Instant Messages (IM) and others. Server 114 may repackage the communication destined for device 108 in network to include a new message structure that contains a new header with appropriate addressing information for device 108c. This may include particular cell and device information about device 108 relating to transmission protocols for network 106 that was not present in the original email.

Device 108c may be a data communication device, a voice communication device, or a multiple-mode device capable of voice, data and other types of communications. Wireless device 108c may be a handheld device, cell phone, smart phone, PDA, and / or computer (either desktop or portable) having a (wireless) network card, network adapter and/or network interface controller (NIC) installed therein. Device 108c may be encoded with a unique serial number, such as a unique personal identification number (PIN) that may be encoded in a data storage component in device 108. Using the PIN, device 108c can be uniquely identified (subject to the uniqueness of its PIN) by server 114 or other features accessing device 108 through a network. A PIN may be used as an identifier in processing communications for device 108c, as it identifies a device 108c associated with a message being sent from it (or to it). As such, when a device 108c provides its PIN to server 114, the PIN may be a sufficient identifier for server 114 to validate the authenticity of device 108c and communications received from it. In other embodiments, a further validation process may be required, such as requiring that device 108c provides a password with its PIN, when attempting to access an application or service provided by server 114.

Terminal device 116 is a computer, which may be connected to device 108c. Terminal device 116 may be a desktop computer, a laptop computer or any other electronic device having computing and communications capabilities. Herein the term "terminal device 116", "device 116" and "computer 116" are used interchangeably. Computer 116 may connect to device 108c through many exemplary connection systems, including a wired or wireless connection systems. A universal serial bus (USB) connection may provide a wired connection. A Bluetooth (trademark) network may provide a different, wireless connection. A software application is provided on computer 116 to detect when a connection has been made to device 108c. Detection can be made through monitoring signals through a connection port on computer 116 or through wireless signals received by computer 116. Another software application is provided on device 108c to detect when a connection has been made to computer 116. A "handshaking" routine may be provided to negotiate connection and communication protocols between computer 116 and device 108c. When computer 116 is being connected to device 108c, it may or may not have another independent connection to network 102 or another network. Status information about computer 116 and its network connections and any network addresses associated with computer 116 may be provided to device 108c. Status information about device 108c and its network connections and any network addresses associated with computer 108c may be provided to computer 116. The connection between device 108c and computer 116 may be a secure connection. The security level may be negotiated following a connection handshake process executed between device 108c and computer 116. The level of security may be set depending on requirements for security between the two devices for a given network.

An embodiment allows computer 116 to access an account and its associated applications and services, managed by a server in network 102, such as server 114. One embodiment provides a facility for computer 116 to access such an account when a communication link has been established between computer 116 and device 108c. In this embodiment, computer 116 can utilize features of the accessed account, including communication functions, such as SMS, text and IM messaging. Also, an embodiment provides a user-friendly connection process, so that computer 116 is provided with applications, services and data as necessary to connect to device 108c on an as-needed basis. This reduces the need for having pre-installed software and services provided on computer 116 when it is accessing the account (and applications) of device 108c.

When computer 116 has accessed an account associated with device 108c, computer 116 may create and send an outbound communication and / or receive and review an inbound communication associated with the account. Access to the account may be provided through device 108c or through a separate communications link connecting computer 116 to a network.

An embodiment provides computer 116 with access to the account by creating and managing an associated account that is logically linked to a primary account associated with device 108c. This provides flexibility and security for the primary account, since the account is still (primarily) associated with the original device 108c. The term "primary account" may refer to any account associated with original device 108c and is not necessarily the sole and / or predominant account associated with device 108c. By associating computer 116 with device 108c, there is a higher level of certainty of identification of the user of computer 116. Since the associated account for computer 116 is related to the primary account of device 108c, the level of security associated with the primary account may be imparted to a level of security for the associated account. Several different exemplary associated accounts are described below.

A first type of associated account is a hosted account. Herein, computer 116 is provided with and utilizes the account of device 108c (e.g. the PIN of device 108c) when it is communicating with server 114. When sending communications to server 114, computer 116 may access the PIN of device 108c and use device 108c as the "sender" of the communication. In this configuration, an application is provided to computer 116 that connects and communicates with device 108c that provides computer 116 with direct access to the communication records of device 108c mimicking a user that would be accessing the communication application directly on device 108c. Any messages that are created and initiated for sending through computer 116 are generated on computer 116 using the keyboard and display of computer 116, which would typically provide a full size keyboard and a large display. The messages may also be stored on computer 116. Once the message generated on computer 116 is completed and is activated for transmission, the message is sent from computer 116 to device 108c. Thereafter device 108c receives the message and sends the message to network 102 through its (secure) connection to network 102. When network 102 receives the message, server 114 can process and forward it as a message that was generated completely by device 108c. As such, computer 116 is operating as a terminal connection to device 108c when using a hosted account.

A second type of associated account is a virtual, temporary account. Herein, when computer 116 has been connected to device 108c, a request is sent by either of computer 116 or device 108c to server 114 (or a network administrator associated with server 114) to create a virtual, temporary account that is to be associated with the primary account of device 108c. For example, a temporary PIN may be created and associated with the PIN of device 108c. The temporary PIN is also associated with computer 116. In this configuration, an application is provided to computer 116 that connects and communicates with device 108c that provides computer 116 with direct access to the communication records of device 108c mimicking a user that would be accessing the communication application directly on device 108c, but using the virtual PIN as an identifier for the message being sent. Messages that are created and initiated for sending through computer 116 are generated, stored and sent via computer 116 through a network connection to server 114 for further distribution. In other embodiments, the messages may be sent through device 108c. The temporary PIN would be generated by server 114. A pseudorandom number generator (or other unique or quasi-unique number generating algorithms) may be used to generate a unique value for the temporary PIN. In one embodiment, the temporary PIN would remain active as long as device 108c is connected to computer 116. If that connection becomes disconnected, server 114 cancels or otherwise disables the temporary PIN. Computer 116 may communicate through its own connection to network 102 or through the connection of device 108c to network 102. This communication channel may be determined by the IT policy of network 102.

A third type of associated account is a meta account. Herein, when computer 116 has been connected to device 108c, a request is sent by either of computer 116 or device 108c to server 114 (or a network administrator associated with server 114) to create a meta PIN for computer 116 based on identification data associated with device 108c, including the PIN of device 108c or other identifying information, such as a Mobile Subscriber Integrated Services Digital Network Number (MSISDN) or an International Mobile Equipment Identity (IMEI) number, which are unique numbers associated with different classes of communication devices. MSISDN and IMEI numbers are known to those of skill in the art. Server 114 would then create a meta account that is associated with the account of device 108c. For example, a meta PIN may be created and associated with the PIN of device 108c. The meta PIN is also associated with computer 116. In this configuration, an application is provided to computer 116 that connects and communicates with device 108c that provides computer 116 with direct access to the communication records of device 108c mimicking a user that would be accessing the communication application directly on device 108c, but using the meta PIN as an identifier for the message being sent. Messages that are created and initiated for sending through computer 116 are generated, stored and sent via computer 116 through a network connection to server 114 for further distribution. In other embodiments, the messages may be sent through device 108c. In one embodiment, the meta PIN would remain active as long as device 108c is connected to computer 116. If that connection becomes disconnected, server 114 cancels or otherwise disables the meta PIN. Other termination conditions may be provided. Computer 116 may communicate through its own connection to network 102 or through the connection of device 108c to network 102. This communication channel may be determined by the IT policy of network 102.

When computer 116 is negotiating a connection with server 114, the user of computer 116 may or may not be provided with an option to choose which type of associated account is to be used. An analysis may be conducted on the capabilities of computer 116 and device 108c to determine which type of associated account to provide to computer 116. All types of accounts can co-exist with each other. An overriding IT policy may be defined to establish conditions for co-existing accounts for a particular device 108c or computer 116.

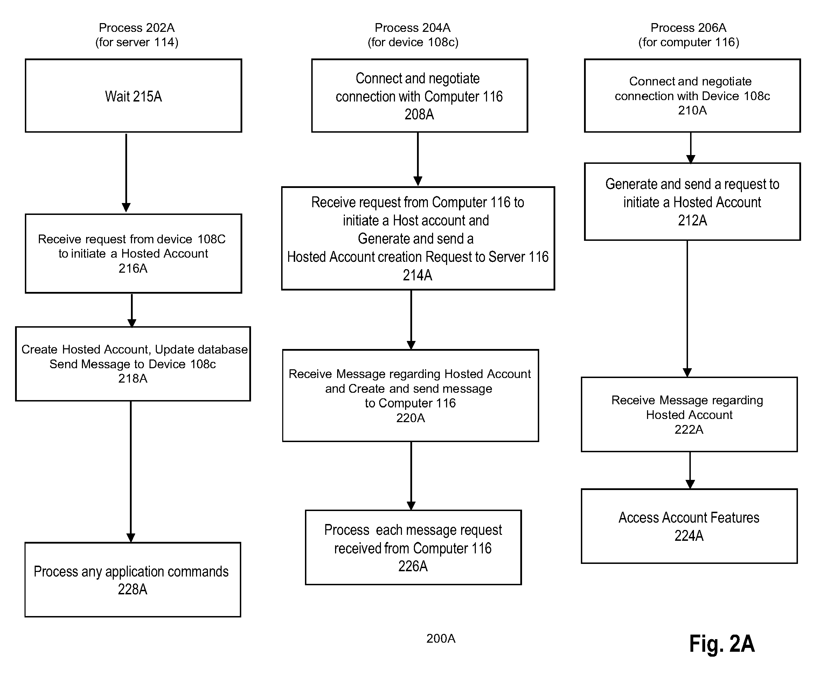

Referring to Figs. 2A-2C, further details on how hosted, temporary and meta accounts are established. Each is discussed in turn. In Fig. 2A, flow chart 200A shows processes executed on each of server 114, device 108c and computer 116 as a hosted account is created. Therein, process 202A is provided for server 114; process 204A for device 108c and process 206A for computer 116. Each process operates independently on each of device 108c, server 114 and computer 116. However, it will be appreciated that each process may rely on receiving external inputs from other processes (e.g. a process may wait for a message/command generated from another process). In processes 208A and 210A, device 108c and computer 116 are connected and they negotiate mutual connection parameters. The connection may be provided through a wired or wireless connection using connectivity modules provided in each of device 108c and computer 116. Once a connection is established, within process 206A, at process 212A, computer 116 sends a request to device 108c to initiate a hosted account creation request to server 114. Within process 214A, device 108c receives the request and generates and sends a hosted account creation request for computer 116 to server 114. Within process 202A, initially server 114 is waiting for an event before it does anything substantive at process 215A. In process 216A, server 114 receives the request from device 108c. In creating the hosted account, the request server 114 extracts or finds identification data relating to computer 116 and extracts and finds the primary account associated with device 108c. The primary account may be identified using the PIN of device 108c. At process 218A, server 114 creates the hosted account particulars, updates its account database to associate messages for the primary account with computer 116 as well as device 108c and sends a confirmation message to device 108c. For device 108c, in process 204A, at process 220A, device 108c receives the message and generates and forwards a "hosting established" message to computer 116. For computer 116, in process 206A, when computer 116 receives the message from device 108c at process 222A, computer 116 may then begin to access a messaging application using the hosted account. Process 224A provides computer 116 with facilities to transmit or receive commands/responses/messages for applications associated with the hosted account via device 108c. Instead of a mere screen sharing facility, software operating on computer 116 enables computer 116 to create, edit and store an action for the applications (e.g. for an IM application, to create an outbound IM message) on computer 116. Then, through the connection with device 108c, the data relating to the action is provided to device 108c, which then forwards and/or proxies a command associated with the action to server 114. As such, in creating and processing the action, computer 116 takes advantage of the primary account associated with device 108c and the secure/authorized connection between device 108c and network 102, so that device 108c is used as a connectivity proxy to network 102 by computer 116. With a proxy implementation, commands/instructions/messages from computer 116 may appear to server 114 as originating from device 108c. For a messaging application, such as IM messaging, other action may be processed by computer 116, including checking received IM messages, reviewing prior IM chat sessions, receiving or initiating invites, and, updating contact lists, etc.

In an alternative embodiment, a separate connection may be established between computer 116 and server 114 that does not go through device 108c. Process 226A in device 108c would not, generally, be conducted. Process 228A in server 114 receives, extracts and executes commands received from computer 116.

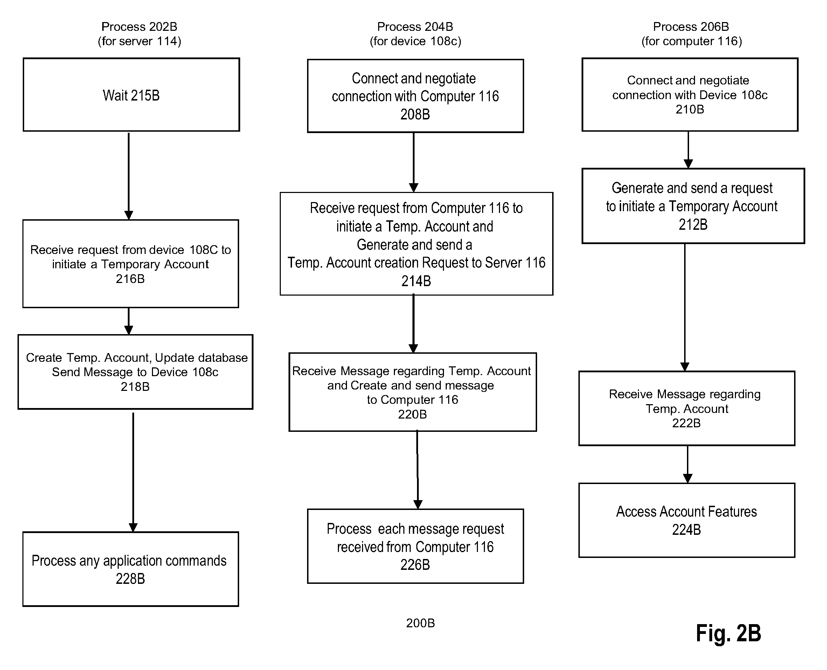

In Fig. 2B, flow chart 200B shows processes executed on each of server 114, device 108c and computer 116 as a temporary account is created. Therein, process 202B is provided for server 114; process 204B for device 108c and process 206B for computer 116. Each process operates independently on each of device 108c, server 114 and computer 116. However, it will be appreciated that each process may rely on receiving external inputs from other processes. In processes 208B and 210B, device 108c and computer 116 have established a physical connection and negotiated mutual connection parameters. The connection may be provided through a wired or wireless connection using connectivity modules provided in each of device 108c and computer 116. For computer 116 in process 206B, once a connection is established, in process 212B, computer 116 sends a request to device 108c to initiate a temporary account creation request to server 114. For device 108c, in process 204B, at process 214B, device 108c receives the request and generates and sends a temporary account connection request on behalf of computer 116 to server 114. For server 114, in process 202B, in process 215B initially, server 114 is waiting for an event before it does anything substantive. Then, in process 216B, server 114 receives the request from device 108c. In creating the temporary account, server 114 and extracts or finds identification data relating to computer 116 and extracts and finds the primary account associated with device 108c. A temporary account is generated using a unique (or pseudo unique) account number generator. The temporary account may be identified using the PIN of device 108c. Within process 218B, server 114 creates the temporary account particulars, updates its account database to associate messages for the primary account with computer 116 as well as device 108c and sends a confirmation message to device 108c. Within process 220B, device 108c receives the message and generates and forwards a "temporary account established" message to computer 116. When computer 116 receives the message from device 108c at process 222B, computer 116 may then begin to access a messaging application using the temporary account. In one embodiment, an action on computer 116 may be initiated (e.g. generating a message) and then data relating to the action may be forwarded to device 108c. Process 224B provides computer 116 with facilities to generate commands to access applications associated with the host account via device 108c. Process 228B in server 114 executes the application command which was ultimately initiated from computer 116 and provides the results to device 108c. As such, software operating on computer 116 provides an interface to an application operating on device 108c, so that communications initiated by computer 116 are forwarded by device 108c to network 102, so that device 108c is operating as a connectivity proxy for computer 116. In an alternative embodiment, a separate connection may be established between computer 116 and server 114 that does not go through device 108c.

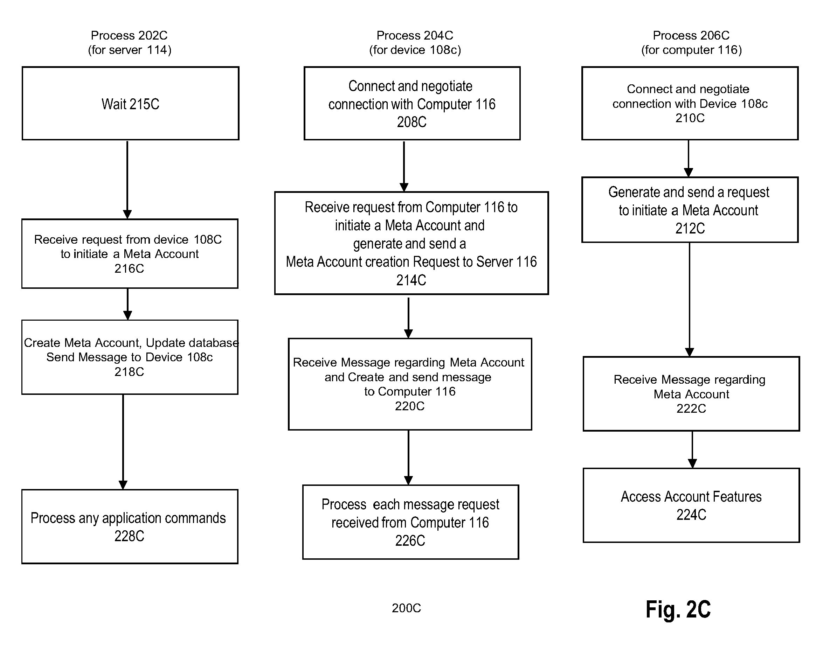

In Fig. 2C, flow chart 200C shows processed executed on each of server 114, device 108c and computer 116 as a meta account is created. Therein, process 202C is provided for server 114; process 204C for device 108c and process 206C for computer 116. Each process operates independently on each of device 108c, server 114 and computer 116. However, it will be appreciated that each process may rely on receiving external inputs from other processes. In processes 208C and 210C, device 108c and computer 116 have been connected and are negotiating mutual connection parameters. The connection may be provided through a wired or wireless connection using connectivity modules provided in each of device 108c and computer 116. For computer 116, in process 206C, once a connection is established, in process 212C, computer 116 sends a request to device 108c to initiate a meta account creation request to server 114. For device 108c in process 204C, at process 214C, device 108c receives the request and generates and sends a meta account connection request for computer 116 to server 114. For server 114, in process 202C, at process 215C initially, server 114 is waiting for an event before it does anything substantive. In process 216C, server 114 receives the request from device 108c. In creating the meta account, server 114 and extracts or finds identification data relating to computer 116 and extracts and finds the primary account associated with device 108c. A meta account is generated using a unique (or pseudo unique) account number generator. The meta account may be identified using the PIN, MSIDSN or IMEI associated with device 108c. In process 218C, server 114 creates the temporary account particulars, updates its account database to associate messages for the primary account with computer 116 as well as device 108c and sends a confirmation message to device 108c. For device 108c, at process 220C, device 108c receives the message and generates and forwards a "meta account established" message to computer 116. When computer 116 receives the message from device 108c at process 222C, computer 116 may then begin to access a messaging application using the meta account. Process 224C provides computer 116 with a facilities to access applications associated with the primary account via device 108c. An additional password layer as a GUI may be implemented at device computer as the meta account is established in order to check for an attempt to "spoof" computer 116. Process 226C in device 108c processes application requests from computer 116. Process 228C in server 114 conducts the application function which was ultimately initiated from computer 116. In this mode, communications between computer 116 and server 114 may be established through a connection that does not go through device 108c. Alternatively, communications initiated by computer 116 may be processed by device 108c, such that and communications carried out between computer 116 and server 114 are processed through device 108c and its communication link to server 114.

When an associated account is created, an application on server 114 that accesses the associated account will be provisioned with the account parameters 'newly' created. Device 108c can send to computer 116 over the secure connection any necessary parameters provided by the application reported by server 114 to computer 116.

In one embodiment, server 114 is a BlackBerry enterprise server (BES) (trademark), device 108c is a BlackBerry enabled smart device and computer 116 is connected to device 108c. The account associated with device 108c is a personal identified number (PIN) that is unique in network 102 to device 108c. Information and records relating to an associated account for computer 116 may be temporal. For example, the records stored on server 114 may be discarded when computer 116 is disconnected from device 108c. When server 114 has established an associated account for device 108c, any application that is associated with the associated account may conduct additional checks and routines to monitor for incoming commands from computer 116 or information or updates that should be provided to computer 116. For example, for a messaging application that is provided through device 108c, server 114 can check for incoming mail destined for device 108c and then determine whether there are any active associated accounts relating to the account for device 108c. If any active associated accounts are identified, incoming mail may also be sent to computer 116 through the connection with device 108c or through another connection. Other functions may be provided by server 114. For example, server 114 may be provisioned to provide for computer 116 all functions and features that it provides to device 108c, such as access to a particular intranet, automatic push of information from server 114 to computer 116, etc.

Another feature of an embodiment provides a system and process to provide computer 116 with an application that is provided to, and launched on, computer 116. The application can be any application, but in an embodiment provides a terminal application to allow computer 116 to connect to device 108c and application(s) that allow computer 116 to initiate account requests to device 108c (or to other devices) and to access applications provided by server 114 (such as an IM application). Another application can also perform security handshake functions with device 108c and / or server 114.

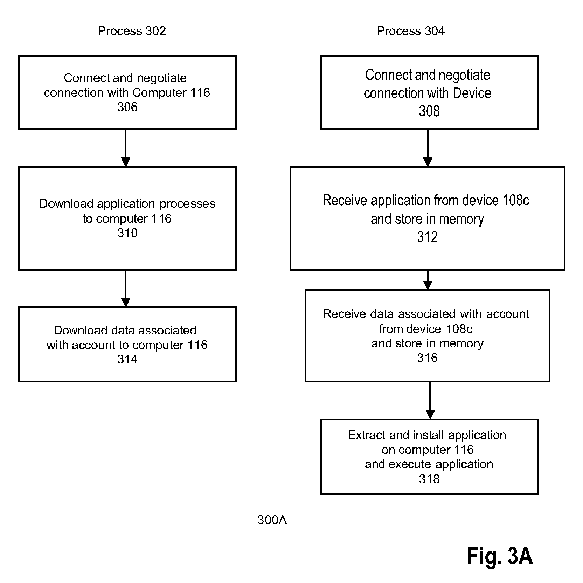

In Fig. 3A, flow chart 300A shows processes executed on each device 108c and computer 116 as a connection is established between the two elements (see processes 208 and 210 above) and an application download feature provided to computer 116 from device 108c. Therein, process 302A is provided for device 108c and process 304A is provided for computer 116. Server 114 and / or device 108c may send messages to computer 116 to identify what its capabilities are and what ancillary modules and ancillary applications need to be provided to computer 116 to allow computer 116 to properly access an application "hosted" by device 108c. For example, if an IM application on server 122 controlled through server 114 is accessed by computer 116 through device 108c, then a message editor application may need to be installed on computer 116. The editor may be based on the functions provided by the message editor provided on device 108c. Additionally, contact data for the IM application may be provided to computer 116. Also, historic message data relating to messages (sent and received) by device 108c may be provided to computer 116. The ancillary applications may be provided to computer 116 from device 108c through the connection between device 108c and computer 116. The ancillary applications may be bundled in an "auto install" routine that automatically unpacks, decompresses and install the ancillary applications into the memory of computer 116.

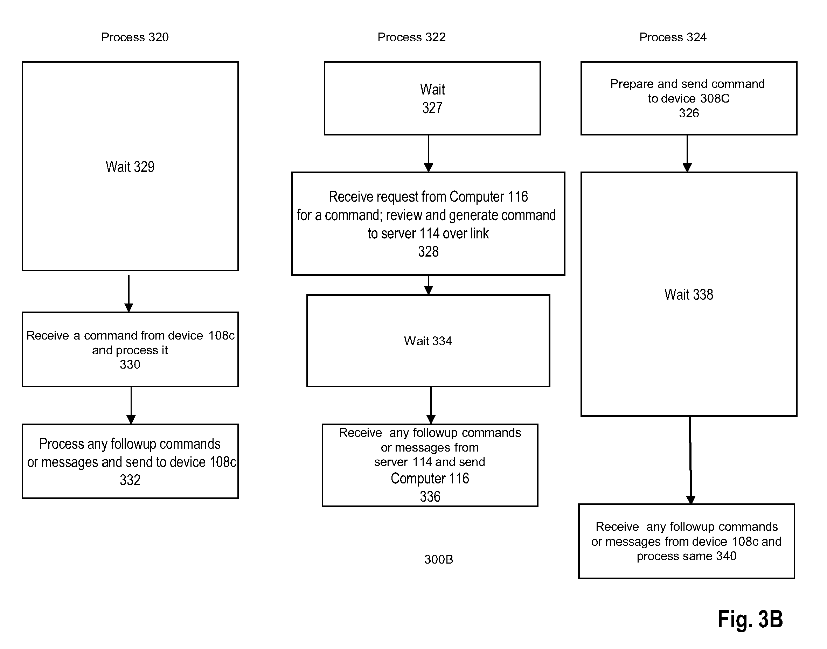

In Fig. 3B, flow chart 300B shows processed executed on each of server 114, device 108c and computer 116 after an associated account has been established for computer 116 and as a command for an application is processed by computer 116. Therein, process 320 is provided for server 114; process 322 for device 108c and process 326 for computer 116. In processes 324, computer 116 is preparing and sends a command to device 108c for the application over the communication link between device 108c and computer 116. As process 324 is being completed device 108c and server 114 are waiting for commands (per processes 327 and 329). Then at process 328, device 108c receives the command from computer 116, reviews it and forwards it to server 114 over the communication link between device 108c and server 114. Information relating to the associated account may also be forwarded to server 114. Then at process 330, server 114 receives the command from device 108c evaluates and executes the received command. For example, if the original command from computer 116 was to process and send an IM message, server 114 may check the credentials of the associated account with the account for device 108c before determining a next process. If the credentials are approved, then server 114 may send an instruction package (with message data) to message server 122 to implement the originally requested command. It will be appreciated that device 108c operates as an intermediary communication point between computer 116 and server 114: computer 116 sends data and commands for the application to server 114 through device 108c and server 114 sends data and commands for the application to computer 116 through device 108c. As such, computer 116 relies and utilizes the level of security provided in the link between device 108c and server 114 (as well as the level of security in the link between computer 116 and device 108c). Generally, device 108c transfers data between computer 116 and server 114 in an encrypted manner. As such, communications / commands that are proxied by device 108c on behalf of the computer 116, are also encrypted. Similarly, levels of security and authorizations established for device 108c to server 114 and its applications may also be used and / or associated with computer 116. Then, server 114 may send any followup commands or status messages to device 108c at process 332. At this time, device 108c is waiting for a reply from server 114, per process 334. Then, device 108c receives any followup commands or status messages from server 114 at process 336 and determines whether status message(s) should be sent to computer 116. At this time, computer 116 is waiting for a reply from device 108c, per process 338. Then, computer 116 receives any followup commands or status messages from device 108c at process 340 and processes them using its installed applications.

With components of device 108c and computer 116 introduced, further detail is provided on a download feature of an embodiment. As previously noted, when a connection is established between computer 116 and device 108c, an application may be downloaded from device 108c (or from another device) to computer 116 through the connection or an alternative connection. In one embodiment, the application has an automatic installation routine to load and install the application on computer 116. In another embodiment, the application has an uninstall routine to remove the application from computer 116. The uninstall routine may be triggered to execute upon any number of conditions, for example disconnection of computer 116 from device 108c, termination of a session between computer 116 and device 108c, termination of a communication program operating on computer 116 relating to its access of an account or application associated with device 108c, etc.

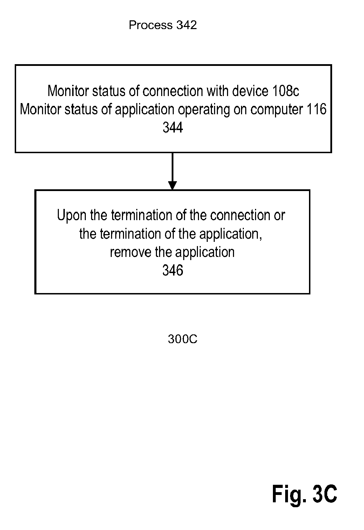

In Fig. 3C, flow chart 300C shows process 342 executed on computer 116 after computer 116 has been provided with downloaded ancillary application(s) from or through device 108c and processes used to trigger removal of such application(s) from computer 116. At process 344, computer 116 monitors the status of connection with device 108 and monitors the status of application operating on computer 116. At process 346, upon the termination of the connection with device 108c and / or the termination of the application, computer 116 removes the ancillary applications operating on computer 116, per process 346. The ancillary applications may be internally marked as "temporary" applications and may deleted from computer 116 using a pre-programmed deletion routine.

With some general features of associated accounts and downloading systems provided by an embodiment, further detail is provided on device 108c.

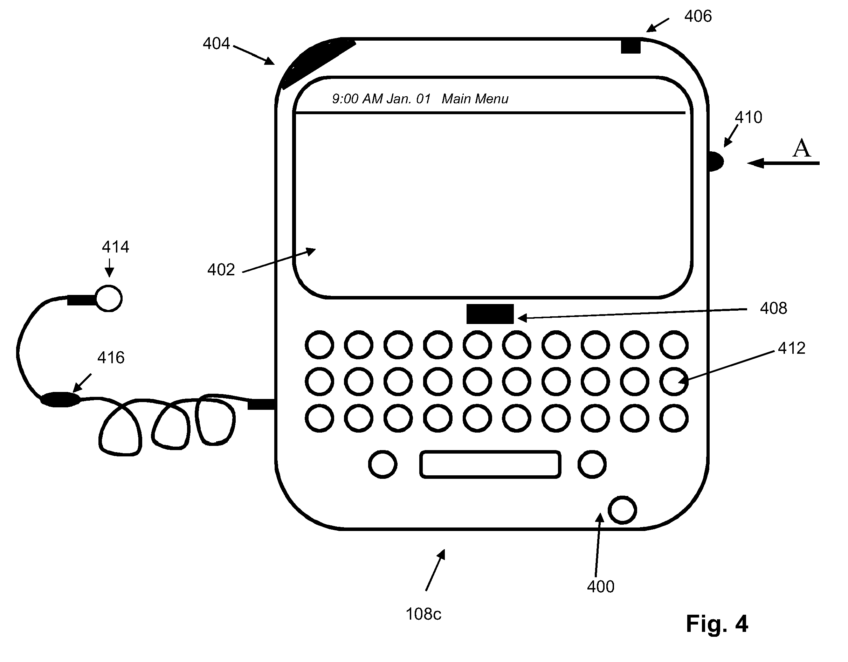

Fig. 4 provides general features of electronic device 108c for processing electronic communications in accordance with an embodiment. In an embodiment, electronic device 108c is based on a computing platform having functionality of an enhanced personal digital assistant with cellphone and email features. It is, however, to be understood that electronic device 108c can be based on construction design and functionality of other electronic devices, such as smart telephones, desktop computers, pagers or laptops having telephony equipment. In a present embodiment, electronic device 108c includes a housing 400, an LCD 402, speaker 404, an LED indicator 406, a touchpad 408, an ESC ("escape") key 410, keypad 412, a telephone headset comprised of an ear bud 414 and a microphone 416. ESC key 410 can be inwardly depressed along the path of arrow "A" as a means to provide additional input to device 108. Similarly, touchpad 408 may be depressed inwardly to provide an additional input. A trackball may be provided (not shown).

It will be understood that housing 400 can be made from any suitable material as will occur to those of skill in the art and may be suitably formed to house and hold all components of device 108c.

Device 108c is operable to conduct wireless telephone calls, using any known wireless phone system such as a Global System for Mobile Communications (GSM) system, Code Division Multiple Access (CDMA) system, CDMA 2000 system, Cellular Digital Packet Data (CDPD) system and Time Division Multiple Access (TDMA) system. Other wireless systems can implement one of the 802.11 protocols (Wi-Fi), which may include support for voice. Additionally, a Bluetooth network may be supported. Other embodiments include Voice over IP (VoIP) type streaming data communications that can simulate circuit-switched phone calls. Further in other embodiments, device 108 may be able to communicate with a Wi-Max network, i.e. a 802.16-class network. Ear bud 414 can be used to listen to phone calls and other sound messages and microphone 416 can be used to speak into and input sound messages to device 108c.

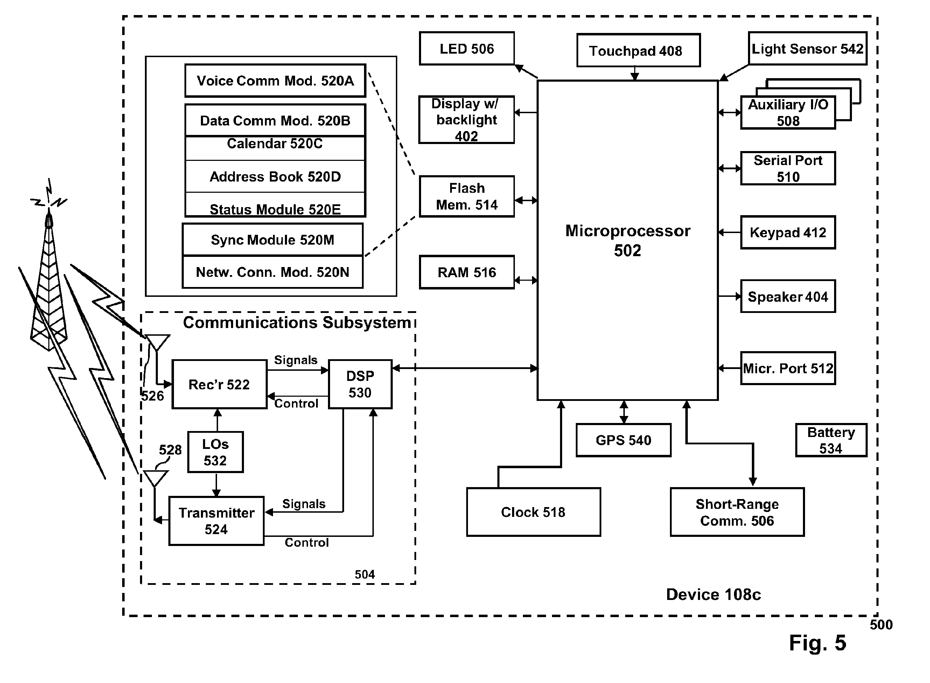

Referring to Fig. 5, functional components of device 108c are provided in schematic 500. The functional components are generally electronic, structural or electro-mechanical devices. In particular, microprocessor 502 is provided to control and receive almost all data, transmissions, inputs and outputs related to device 108c. Microprocessor 502 is shown schematically as coupled to keypad 312 and other internal devices. Microprocessor 502 controls the overall operation of the device 108 and its components. Exemplary microprocessors for microprocessor 502 include microprocessors in the Data 950 (trademark) series, the 6200 series and the P4900 series, all available at one time from Intel Corporation. Microprocessor 402 is connected to other elements in device 108c through a series of electrical connections to its various input and output pins. Microprocessor 502 has an IRQ input line which allows it to receive signals from various devices. Appropriate interrupt firmware is provided which receives and reacts to the signals detected on the IRQ line.

In addition to the microprocessor 502, other internal devices of the device 108 are shown schematically in Fig. 5. These include: display 402; speaker 404; keypad 412; communication sub-system 504; short-range communication sub-system 506; auxiliary I/O devices 508; serial port 510; microphone port 512 for microphone 416; flash memory 514 (which provides persistent storage of data); random access memory (RAM) 516; clock 518 and other device sub-systems (not shown). Device 108c may comprise a two-way radio frequency (RF) communication device having voice and data communication capabilities. In addition, device 108c may have the capability to communicate with other computer systems via the Internet.

Operating system software executed by the microprocessor 502 may be stored in a computer-readable medium, such as flash memory 514, or may be stored in other types of memory devices, such as read-only memory (ROM) or similar storage element. In addition, system software, specific device applications, or parts thereof, may be temporarily loaded into a volatile store, such as RAM 516. Communication signals received by the mobile device may also be stored to RAM 516.

In addition to an operating system operating on device 108c, additional software modules 520 enable execution of software applications on device 108c. A set of software (or firmware) applications, generally identified as applications 520, that control basic device operations, such as voice communication module 520A and data communications module 520B (to handle generation of emails and incoming/outgoing messages), may be installed on the device 108c during manufacture or downloaded thereafter. Data communications module 520B allows the processing of emails, data and other data transmissions by device 108c to enable device 108c to generate views of aspects of the emails, data and data transmissions. As such, inbound and outbound data transmissions can be viewed and processed by data communications module 520B. In the embodiment, other processes and modules are provided to handle the selection and transmission of the emails, data and data transmissions. These other module receive the completed outbound data transmissions from data communications module 520B and then parse, package and transmit the resulting data stream through the selected network. As well, software modules, such as calendar module 520C, address book 520D and location module 520E are provided. Each of these modules may receive and process commands receive locally from device 108c (such as commands entered through keypad 412), commands received from computer 116 through a communication link to computer 116 and / or commands received from server 114 (or other devices in network 102) through a communication link to network 102. These modules, in part, execute processes for device 108c described in Figs. 3A-3C.

Synchronization module (SM) 520M comprises software and / or firmware that detects when computer 116 has been connected to device 108c and processes communications received from computer 116 that relate to a command destined for network 102 (such as to server 114). A connection to computer 116 can be provided through any either communication system 504 or 506, serial port 510 and or I/O device 508. The connection may be provided on a secure link, such as through a secure socket layer (SSL) connection with computer 116. Once a connection has been established, SM 520M may poll computer 116 to evaluate its resources and determine the presence of any ancillary software required to request an associated account from network 102 or access a particular application. SM 520M may also periodically monitor the status of the connection and if the connection is terminated, may execute clean up routines on device 108c to manage resources (such as connections and memory). SM 520M may generate messages to a user of device 108c through a graphical user interface (GUI) and may provide prompts to the user for input or selections where a response is needed to continue processing a feature of the connection, the establishment of a type of associated account or operation of the application accessed through the associated account. This module, in part, executes processes for device 108c described in Figs. 3A-3C.

Network connection module (NCM) 520N comprises software and / or firmware that extracts local data relating to a one or more networks, which can then be used by SM 520M. It also handles the lower level functions for processing communications by device 108c. This module , in part, executes processes for device 108c described in Figs. 3A-3C.

Additional modules such as a personal information manager (PIM) application may be provided. Any module may be installed during manufacture or downloaded thereafter into device 108c.

Data associated with each application, the status of one or more networks, profiles for networks and trigger conditions for commands for networks can be stored and updated in flash memory 514.

Communication functions, including data and voice communications, are performed through the communication sub-system 504 and the short-range communication sub-system 506. Collectively, sub-systems 504 and 506 provide the signal-level interface for all communication technologies processed by device 108c. Various applications 520 provide the operational controls to further process and log the communications. Communication sub-system 504 includes receiver 522, transmitter 524 and one or more antennas, illustrated as receive antenna 526 and transmit antenna 528. In addition, communication sub-system 504 also includes processing modules, such as digital signal processor (DSP) 530 and local oscillators (LOs) 532. The specific design and implementation of communication sub-system 504 is dependent upon the communication network in which device 108c is intended to operate. For example, communication sub-system 504 of device 108c may operate with the Mobitex (trademark), DataTAC (trademark) or GPRS mobile data communication networks and also operate with any of a variety of voice communication networks, such as 802.11-class networks, Bluetooth networks, AMPS, TDMA, CDMA, CDMA 2000, PCS, GSM, GPRS, EDGE, UMTS networks etc. Other types of data and voice (telephonic) networks, both separate and integrated, may also be utilized with device 108c. In any event, communication sub-system 504 provides device 108c with the capability of communicating with other devices using various communication technologies, including instant messaging (IM) systems, text messaging (TM) systems, instant messaging (IM) and short message service (SMS) systems.

Short-range communication sub-system 506 enables communication between device 108c and other proximate systems or devices, which need not necessarily be similar devices, such as computer 116. For example, the short-range communication sub-system may include an infrared device and associated circuits and components, a Wi-Fi or a Bluetooth (trademark) communication module to provide for communication with similarly enabled systems and devices. Sub-system 506 may have one or more inputs or outputs to sub-system 504 in processing signals for its networks.

In addition to processing communication signals, DSP 530 provides control of receiver 526 and transmitter 524. For example, gains applied to communication signals in receiver 526 and transmitter 524 may be adaptively controlled through automatic gain-control algorithms implemented in DSP 530. One particular operational aspect of receiver 522 and antenna 526 is that they need to be tuned to receive signals in the 802.11 network bands, e.g. signals in the 2.4 GHz to 5.8 GHz range for sub-systems 506 and if needed, sub-system 504. Additional filters on antenna may also be used to provide such functionality. NCM 520N can receive and interpret the signals and can generate its own queries to networks 104 and 106 to acquire technical performance data relating to each network. Such data can then be stored and used by SM 520M.

Receiver 522, antenna 526 and NCM 520N provide at least some of the hardware and software elements needed to detect when device 108c is in the presence of communication signals from wireless network 106, thereby enabling device 108c to communication with other devices in wireless network 106.

Powering the entire electronics of the device 108c is power source 534. In one embodiment, the power source 534 includes one or more batteries. In another embodiment, the power source 534 is a single battery pack, especially a rechargeable battery pack. In another embodiment, the device may be solar-powered. A power switch (not shown) provides an "on/ofP' switch for device 108c. A power source interface (not shown) may be provided in hardware, firmware, software or a combination of such elements to selectively control access of components in device 108c to power source 534. Upon activation of the power switch an application 520 is initiated to turn on device 108c. Upon deactivation of the power switch, an application 520 is initiated to turn off device 108c. Power to device 108c may also be controlled by other devices and by software applications 520.

Device 108c may also have global positioning system 536 to assist in identifying a present location of device 108c and may also have light sensor 538 to provide data on the ambient light conditions for device 108.

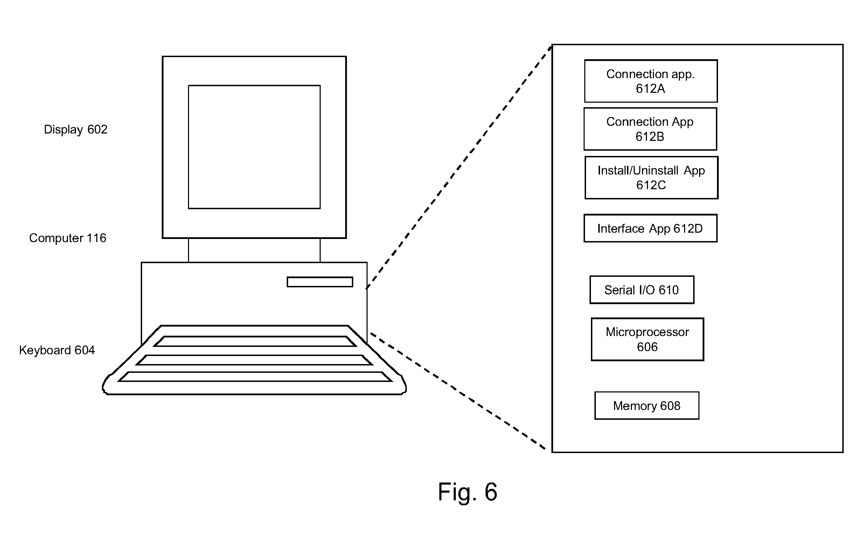

Now, further detail is provided on features of computer 116. Referring to Fig. 6, general features of computer 116 for processing electronic communications in accordance with an embodiment are shown. In an embodiment, computer 116 is based on a general purpose computing platform. It may have the form factor of a desktop or laptop computer. It may be a minicomputer. In a present embodiment, computer 116 includes display 602 and keypad 604. Internally, computer 116 has microprocessor 606 and memory 608. Serial I/O port 610 provides one communication connection system to allow computer 116 to connect to device 108c and other devices. Alternative connections (such as to other networks 104 and 102) are provided through network connection module 612. Applications 612 are software that execute on microprocessor 606 and may be stored in memory 608. Applications 612 may be loaded into computer 116 through a remote connection or through an I/O device such as a disk drive (not shown).

Applications 612, control basic operations of computer 116, including port 610 and connections module 612. Communication application 612A provides the connection-level communication between computer 116 and device 108c, allowing processing of emails, IMs, data and other data transmission by computer 116 when connected to device 108c. Connection monitoring application 612B monitors the status of the connection between computer 116 and device 108c. Upon detection of a disconnection of that connection, application 612B may provide a status signal to other applications. Install/Uninstall application 612C installs and uninstalls applications, ancillary application, data and lists associated with an application on computer 116 that is used in association with device 108c. Interface application 612D is an interface application that is allows computer 116 to create, store and send data and commands for the application being accessed on network 102. As such, applications 612A-D execute processes for computer 116 described in Figs. 3A-3C.

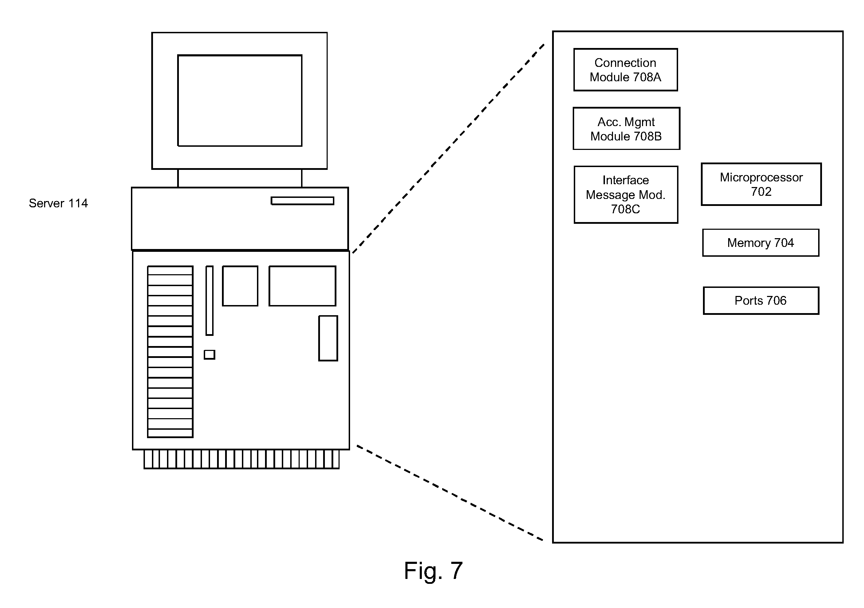

Now, further detail is provided on features of server 114. Referring to Fig. 7, general features of server 114 for processing electronic communications in accordance with an embodiment are shown. In an embodiment, server 114 is based on a general purpose computing platform. It may have the form factor of a desktop or laptop computer. It may be a minicomputer. In a present embodiment, computer 114 includes main processing station 700. Internally, server 114 has microprocessor 702 and memory 704. Connection ports 706 provides one communication connection system to allow server 114 to connect to with network 102, including device 108c and other devices. Modules 708 are software applications that execute on microprocessor 702 and may be stored in memory 704 as database 118. Modules 708 may be loaded into computer 116 through a remote connection or through an I/O device such as a disk drive (not shown).

Modules 708, control basic operations of computer 116, including ports 706. Connection module 708A provides the connection-level communication between server 114 and other elements in network 102, such as message server 122 and device 108c, to ultimately allow processing of emails, IMs, data and other data transmission by computer 116 when connected to device 108c. Account management module 708B creates associated accounts for an account of device 108c and selectively compares account data in a message received from device 108c to determine if in information identifying an associated account in the message can be verified to be associated with device 108c. Interface message module 708C receives and reviews messages received from device 108c and other servers 122. When processing an incoming message request from device 108c, module 708C may cause module 708B to verify the associated account in the received message. If the associated message is verified, module 708C may initiate a command to server 122 to generate and send the intended message to the intended recipient. As such, modules 708A-C execute processes for server 114 described in Figs. 3A-3C.

It will be appreciated that modules operating on device 108c, server 114, computer 116 and other applications in the embodiments can be implemented using known programming techniques, languages and algorithms. The titles of the modules are provided as a convenience to provide labels and assign functions to certain modules. It is not required that each module perform only its functions as described above. As such, specific functionalities for each application may be moved between applications or separated into different applications. Modules may be contained within other modules. Different signalling techniques may be used to communicate information between applications using known programming techniques. Known data storage, access and update algorithms allow data to be shared between applications. It will further be appreciated that other applications and systems on device 108c, computer 116 and server 114 may be executing concurrently with any module on the same device or on other devices. As such, one or more aspects of any modules may be structured to operate in as a "background" application on device 108c, computer 116 or server 114, using programming techniques known in the art.

As used herein, the wording "and / or" is intended to represent an inclusive-or. That is, "X and / or Y" is intended to mean X or Y or both.

The present invention is defined by the claims appended hereto, with the foregoing description being merely illustrative of embodiments of the present disclosure. Those of ordinary skill may envisage certain modifications to the foregoing embodiments which, although not explicitly discussed herein, do not depart from the scope of the disclosure, as defined by the appended claims.

## Claims

1. A method in a host device, comprising:
receiving a request to create an associated account associated with a primary account;
requesting creation of an associated account for a terminal device; and
upon receiving a message regarding the creation of the associated account,
sending a message regarding the associated account to the terminal device.

2. The method in a host device as claimed in claim 1, wherein:
said request is received by a server in a network;
said primary account is associated with said host device;
said associated account provides access to said primary account for said terminal device; and
access is provided by said server to an application associated with said primary account to said terminal device through said associated account.

3. The method in a host device as claimed in claim 2, wherein:
said associated account utilizes an account identifier associated with said primary account; and
said terminal device accesses said application using said associated account through said host device and a connection between said host device and said server.

4. The method in a host device as claimed in claim 2, wherein:
said associated account is associated with said primary account as long as said terminal device has a communication link established with another device; and
said terminal device accesses said application using said associated account through a connection linking said terminal device to said another device and server.

5. The method in a host device as claimed in claim 2, wherein:
said associated account utilizes an account identifier associated with said primary account and identification information associated with another device; and
said terminal device accesses said application using said associated account through said another device and a connection between said another device and
said server.

6. The method in a host device as claimed in claim 2, further comprising:
transferring to said terminal device an ancillary application for installation on terminal device providing access to said application when said terminal device is connected to another device.

7. The method in a host device as claimed in claim 6, further comprising:
removing said ancillary application from said terminal device when said application has been terminated or when said communication link is disconnected.

8. The method in a host device as claimed in claim 2, wherein:
said application is a messaging application accessible by said host device;
said terminal device creates an outbound message for transmission by said application using an ancillary application operating on said terminal device and transmits said outbound message to said host device;
said host device receives said outbound message and creates and sends a second outbound message containing said outbound message to said server; and
said server receives said second outbound message, checks the associated account data of said terminal device against said second outbound message,
and if said associated account data is verified, then said server forwards said second outbound message to a message server for processing.

9. A method for processing a command by a host device connected to a network, comprising:
at said host device receiving a message containing a command and data from a terminal device connected to said host device, said command relating a function to be executed by said application;
at said host device, evaluating said command and said data from said message and generating a second command relating to said command and said data for a server in said network; and
sending said second command to said server from said host device.

10. The method for processing a command by a host device connected to a network as claimed in claim 9, wherein:
said server analyzes data of an associated account for said terminal device against a primary account for said host device to determine if said command in said second message is to be executed.

11. The method for processing a command by a host device connected to a network as claimed in claim 10, wherein:
said associated account is associated with said primary account as long as said terminal device has a communication link established with another device; and
said terminal device accesses said application using said associated account through a connection linking said terminal device to another device and said server.

12. The method for processing a command by a host device connected to a network as claimed in claim 10, wherein:
said associated account utilizes an account identifier associated with said primary account and identification information associated with another device; and
said terminal device accesses said application using said associated account through said another device and a connection between said another device and
said server.

13. An application operating on a microprocessor of a host device, said application providing instructions to said microprocessor:
to identify a primary account associated with said host device after establishing a communication link between a terminal device and said host device;
to establish an associated account for said terminal device, said associated account providing access to said primary account for said host device; and
to provide access by said server to an application associated with said primary account to said terminal device through said associated account.

14. The application operating on a microprocessor of a host device as claimed in claim 16, wherein:
said associated account is associated with said primary account as long as said electronic device has a communication link established with another device; and
said electronic device accesses said application using said associated account through a connection linking said electronic device to said another device and server.

15. The application operating on a microprocessor of a host device as claimed in claim 14, wherein:
said associated account utilizes an account identifier associated with said primary account and identification information associated with said another device; and
said terminal device accesses said application using said associated account through said another device and a connection between said another device and said server.

## Amended claims

### Amended claims in accordance with Rule 137(2) EPC.

**1.** A method for associating a terminal device with a host device, said host device communicating with a server through a first communication link, said host device having a primary account to access a message application operating on said server, said method comprising:
after a second communication link is established between said terminal device and said host device, receiving at said server a request to create an associated account for said terminal device that is to be associated with said primary account for said host device; and
at said server, creating said associated account for said terminal device, said associated account providing access to said primary account for said terminal device,
wherein
access is provided by said server to said application to said terminal device through said associated account.

**2.** The method for associating a terminal device with a host device as claimed in claim 1, wherein:
said terminal device accesses said message application using said associated account through said host device and said first communication link;
when said terminal device creates a message for transmission to said server through said message application, said terminal device forwards said message to said host device and said host device forwards said message to said server through said first communication link.

**3.** The method for associating a terminal device with a host device as claimed in claim 1, wherein:
said associated account has an identification number associated with said terminal device;
when said terminal device creates a message for transmission to said server through said message application, said identification number is associated with said message for its transmission by said server; and
said associated account is disassociated from said primary account when said first communication link is disconnected between said host device and said terminal device.

**4.** The method for associating a terminal device with a host device as claimed in claim 3, further comprising:
installing on said terminal device an ancillary application, said ancillary application providing access to said messaging application when said terminal device is connected to said host device.

**5.** The method for associating a terminal device with a host device as claimed in claim 4, further comprising:
automatically removing said ancillary application from said terminal device when said message application on said terminal device has been terminated or when said first communication link is disconnected.

**6.** The method for associating a terminal device with a host device as claimed in any one of claims 4 or 5, wherein:
said terminal device creates an outbound message for transmission by said message application using said ancillary application and transmits said outbound message to said host device;
said host device receives said outbound message and creates and sends a second outbound message containing said outbound message to said server; and
said server receives said second outbound message, checks the associated account data of said terminal device against said second outbound message, and if said associated account data is verified, then said server forwards said second outbound message to a message server for processing.

**7.** The method for associating a terminal device with a host device as claimed in claim 1, wherein:
said associated account has an identification number associated with said terminal device; and
said terminal device accesses said message application using said associated account through a third communication link linking said terminal device to said server that does not go through said host device.

**8.** The method for associating a terminal device with a host device as claimed in claim 7, further comprising:
when said terminal device accesses said associated account, a password process operating on said terminal device is initiated to verify a user of said associated account.

**9.** The method for associating a terminal device with a host device as claimed in claim 7 or 8, wherein:
said identification number is associated an identification number of said host device.

**10.** The method for associating a terminal device with a host device as claimed in claim 1, wherein said associated account is one of:
a first account type that
accesses to said message application through said host device and said first communication link, where when said terminal device creates a message for transmission to said server through said message application, said terminal device forwards said message to said host device and said host device forwards said message to said server through said first communication link;
a second account type that
provides an identification number associated with said terminal device, where when said terminal device creates a message for transmission to said server through said message application, said identification number is associated with said message for its transmission by said server and said associated account is disassociated from said primary account when said first communication link is disconnected between said host device and said terminal device; or
a third account type that
provides an identification number associated with said terminal device, where when said terminal device accesses said message application using said associated account through a third communication link linking said terminal device to said server that does not go through said host device;
and
said host device is provided with a routine to allow election of which of said first, second or third account type is to be used by said account.

**11.** The method for associating a terminal device with a host device as claimed in any one of claims 1 to 10, wherein:
said host device is a portable communication device; and
said terminal device is one of a laptop computer, a desktop computer or another communication device.

**12.** A computer readable medium storing computer readable instructions for causing a server to perform the method as claimed in any one of claims 1 to 11.
